# EUROPEAN PATENT SPECIFICATION

(11) **EP 0 717 907 B1**
(45) Date of publication and mention of the grant of the patent: **10.05.2000**
(21) Application number: 95925627.2
(22) Date of filing: 11.07.1995
(51) Int. Cl.: H04N 7/167

(54) **ENCRYPTION/DECRYPTION PROCESS AND APPARATUS FOR A MULTICHANNEL TELEVISION SYSTEM**
VER- UND ENTSCHLÜSSELUNGSVERFAHREN UND -GERÄT FÜR MEHRKANALFERNSEHSYSTEM
PROCEDE ET DISPOSITIF DE CODAGE ET DE DECODAGE POUR UN SYSTEME DE TELEVISION A CANAUX MULTIPLES

(30) Priority: 11.07.1994 WO PCT/US94/07694; 28.10.1994 US 331054
(43) Date of publication of application: 26.06.1996
(73) Proprietor: CALIFORNIA AMPLIFIER, Camarillo, CA 93010 (US)
(72) Inventor: MILIANI, Pablo, Hero Communications, 01454-902-Sai Paulo, SP (BR)
(74) Representative: Schaumburg, Karl-Heinz
(86) International application number: US9508721
(87) International publication number: WO9602111

(56) References cited:
- WO-A-92/22987
- WO-A-93/11642
- WO-A-93/14597
- GB-A- 2 260 247
- US-A- 3 914 534
- US-A- 4 330 794
- US-A- 4 864 613
- US-A- 5 319 709
- NATIONAL CABLE TELEVISION ASSOCIATION, 32nd Annual Convention & Exposition, 12-15 June 1983, Houston TX, WILLIAM T. HOMILLER, "Headend Techniques for Reducing Distortion in Distributed Systems", pages 94-99.

## Description

### BACKGROUND OF THE INVENTION

The present invention relates generally to multichannel television systems and more particularly to a method and apparatuses for distributing multiple video signals.

Subscription television distribution systems (either (1) cable or (2) over-the-air) typically provide subscribers a basic block of television channels for a basic monthly fee and one or more premium channels for an additional fee. In a typical cable system, the physical connection itself controls access to the basic channels while the premium channels are often "scrambled" (encrypted) to restrict their viewing to only subscribers who pay the additional fee.

In over-the-air systems (often called "wireless TV"), all channels are generally scrambled to prevent unauthorized reception of both basic and premium channels since the transmitted signals are available to anyone in the geographical service area. Subscribers are typically provided with a descrambler which can descramble one channel at a time. Therefore, subscriber receivers, e.g., television sets, videocassette recorders, can only be tuned to a single selected channel and features of modern television equipment that process multiple channels, e.g., "picture-in-picture", are useless.

A commonly used television encryption/scrambling method, known as "sync suppression", involves the suppression or removal of horizontal and/or vertical synchronization pulses so that a receiver is unable to properly synchronize the picture display. The subscriber's decrypter/descrambler restores, in a selected channel, the suppressed or omitted synchronization components of the received video signal so that the picture information can be properly displayed.

Sync suppression systems include both (1) baseband sync suppression and (2) RF sync suppression. In baseband systems, the signal is descrambled in baseband video after demodulation of the selected RF channel. In RF systems, descrambling is performed prior to demodulation.

U.S. Patents directed to television encryption/decryption methods and apparatus include 4,466,017; 4,503,462; 4,590,419; 4,594,609; 4,598,313; 4,602,284; 4,706,283; 4,802,214; 4,815,129; 4,817,144; 4,864,613; 4,926,477; 4,928,309; 5,058,160; and 5,093,921.

US-A-3 914 534 discloses multiple system embodiments (as exemplified by Figure 1) which have a central unit for coupling a plurality of video sources to individual subscriber locations. More particularly, the central unit includes means for selectively connecting one of the television program sources to one channel for a first period of time and to a second channel for a second time period which includes a switching matrix under the control of a code generator which is synchronized with the field synchronizing means so that switching occurs only during vertical retrace periods. Similar means are included within a subscriber control unit to connect the television receiving device to one channel for the first time period and to the other channel for the second time period to thereby provide a preferred television program signal to the receiving device during both the time periods. Thus, this document teaches carrying information relating to different portions of a single program source on multiple channels. It then teaches recovering a television signal corresponding to this single program source by timing switching at the subscriber site between the multiple channels. The described system appears to descramble only one video signal at a time and thus does not address the problem of how to simultaneously provide multiple decrypted signals for direct simultaneous application to television tuners at a subscriber site.

US-A-4 330 794 shows the formation of multiple channel signals. A particular timing signal is extracted at the subscriber site to descramble the program associated with a selected channel. The reference does not teach restricting such signals such that their respective video signal synchronization components are in time coincidence. The apparatus does not generate a common timing reference signal synchronous with said time coincident synchronization components.

WO-A-92 22987 discloses a system that encodes a plurality of television channels using a plurality of timing reference signals and then transmits a separate timing reference data carrier for decoding each television channel in a separate, i.e., out-of-band, portion of the RF spectrum, e.g., 108-114 MHz. The use of this out-of-band portion of the RF spectrum is distinguished from in-band prior art systems, i.e., systems which transmit data within a television channel. Thus, a typical embodiment has a plurality of data carriers, i.e., timing reference signals, in a portion of the RF spectrum isolated from the television channel with a one-to-one relationship between each data carrier and television channel. There is no suggestion of using common in-band timing reference signals. Rather, this in-band use is only for backward compatibility.

### SUMMARY OF THE INVENTION

The present invention is defined in claims 1 and 11-14 and is directed to a method and apparatuses for distributing multiple video signals, which facilitate simultaneous decryption of multichannel encrypted television signals thus making them simultaneously available for direct tuning in television receivers. The invention can be advantageously used in subscription television distribution systems to provide subscribers with a plurality of simultaneously available television signals.

Claim 14 is concerned with a subscriber site apparatus for use with an apparatus in accordance with one of claims 11 to 13.

An apparatus in accordance with the invention is characterized by the utilization of a plurality of channel signals each containing picture portions and synchronization portions respectively corresponding to the picture components and synchronization components of a different video signal. In accordance with a significant feature of the invention, corresponding portions of all channel signals are time synchronized with respect to a common timing reference signal. Each channel signal is encrypted in accordance with a predetermined encoding rule and distributed to subscriber sites where, in accordance with another significant feature of the invention, the channel signals are made simultaneously available for viewing by decrypting them synchronously with the recovered timing reference signal and in accordance with the inverse of the selected encoding rule.

In a preferred embodiment, received intermediate frequency channel signals are simultaneously decoded by passing them through a single downconverter/decoder, e.g., a variable gain amplifier whose gain is varied in accordance with the inverse of the selected encoding rule.

In another preferred embodiment, the intermediate frequency channel signals are upconverted to RF frequency channel signals for transmission to a subscriber site as a common RF signal where they are simultaneously downconverted and decoded by shaping their amplitude in accordance with the inverse of the selected encoding rule.

In accordance with an aspect of a preferred embodiment, authorization data is combined with the common timing reference signal before and modulated onto a selected channel signal before distribution to the subscriber sites. In accordance with a further aspect of a preferred embodiment, the modulation apparatus uses a frequency modulation technique that does not alter the difference between audio and video carrier frequencies.

The novel features of the invention are set forth with particularity in the appended claims. The invention will be best understood from the following description when read in conjunction with the accompanying drawings.

### BRIEF DESCRIPTION OF THE DRAWINGS

Figure 1A illustrates that decryption is typically restricted to a single selected signal in prior art subscription television distribution systems;
Figure 1B illustrates that decryption provides simultaneous access to all encrypted signals in a subscription television distribution system in accordance with the present invention;
Figure 2 illustrates encryption/decryption processes in accordance with the present invention;
Figures 3A and 3B are block diagrams of alternative embodiments of an encryption system configured to facilitate the simultaneous decryption of all encrypted signals;
Figure 4 is a block diagram of apparatus for simultaneous decryption of signals generated by the systems of Figures 3A and 3B;
Figure 5 illustrates a typical composite video signal;
Figure 6A is an enlarged view of the picture and horizontal synchronization components of a plurality of composite video signals;
Figure 6B illustrates the composite video signals of Figure 6A with like components in time coincidence;
Figure 6C illustrates an exemplary encoding rule for encoding the components of the composite video signals of Figure 6B;
Figure 6D illustrates a plurality of encoded composite video signals resulting from modification of the composite video signals of Figure 6B in accordance with the encoding rule of Figure 6C;
Figure 6E illustrates a plurality of video IF carriers, each amplitude modulated with a different one of the encoded composite video signals of Figure 6D;
Figure 6F illustrates a decoding rule which is the inverse of the encoding rule of Figure 6C;
Figure 6G illustrates the video IF carriers of Figure 6E after modification in accordance with the decoding rule of Figure 6F;
Figure 7 illustrates the command transmission structure comprised of multiple data bytes and a reference pulse that are added to a selected television signal;
Figure 8 illustrates the relationship of the command transmission structure of Figure 7 to a typical 525 lines, 60 HZ television signal;
Figure 9 illustrates the relationship of the reference pulse to the tenth horizontal sync pulse in the television signal of Figure 8;
Figure 10 illustrates the relationship of the command transmission structure of Figure 7 to a typical 625 lines, 50 Hz television signal;
Figure 11 illustrates the relationship of the reference pulse to the eighth horizontal sync pulse in the television signal of Figure 10;
Figure 12 is an expanded block diagram of a portion of the processing of video channel N as shown in Figure 3B;
Figure 13 is a top level block diagram of an up/down converter embodiment of the data modulator of Figures 3B and 12;
Figure 14 is a detailed block diagram of a preferred up/down converter as shown in Figure 13;
Figure 15 is a block diagram of a preferred embodiment of the decoder portion of the downconverter/decoder as shown in Figure 4; and
Figure 16 is a detailed block diagram of an exemplary embodiment of the decoder of Figure 15.

### DESCRIPTION OF THE PREFERRED EMBODIMENTS

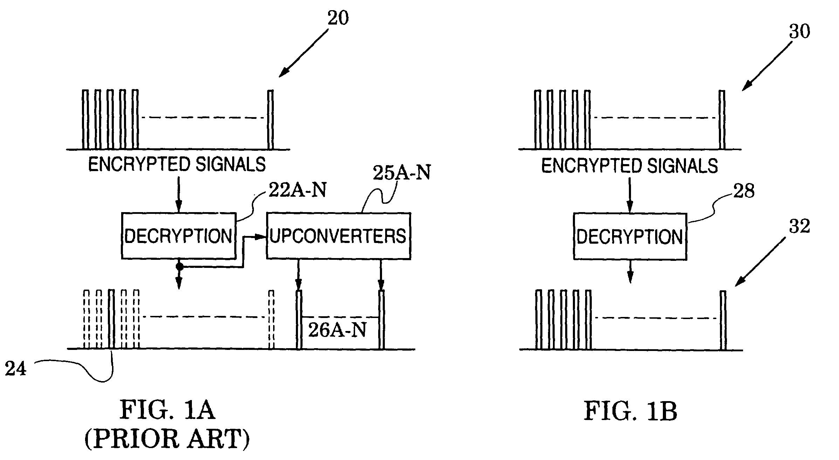

As shown in Figure 1A, typical prior art television distribution systems provide subscribers with a plurality of encrypted television signals 20 but restrict decryption 22 to the production of one decrypted signal 24 at a time. Thus, for example, a subscriber can cause any one of the encrypted signals 20 to be decrypted for viewing on a television set but cannot, at the same time record another decrypted signal on a video cassette recorder or use another signal for a "picture-in-picture" system. In an attempt to address this limitation, one prior art system uses a plurality of decoders, e.g., 22A-22N, one for each encrypted channel, that respectively decode the signals which are then upconverted by a plurality of upconverters 25A-25N to a new channel frequency 26A-26N.

Figure 1B illustrates that encryption/decryption systems taught by the present invention facilitate decryption 28 of all encrypted signals 30 simultaneously so that a complete set of decrypted signals 32 is simultaneously available in their original frequency slots. Therefore, a subscriber can have each of a plurality of television receivers (e.g., television sets, video cassette recorders) receiving a different signal simultaneously while also using modern television processing features, e.g., picture-in-picture, which require simultaneous availability of multiple channels.

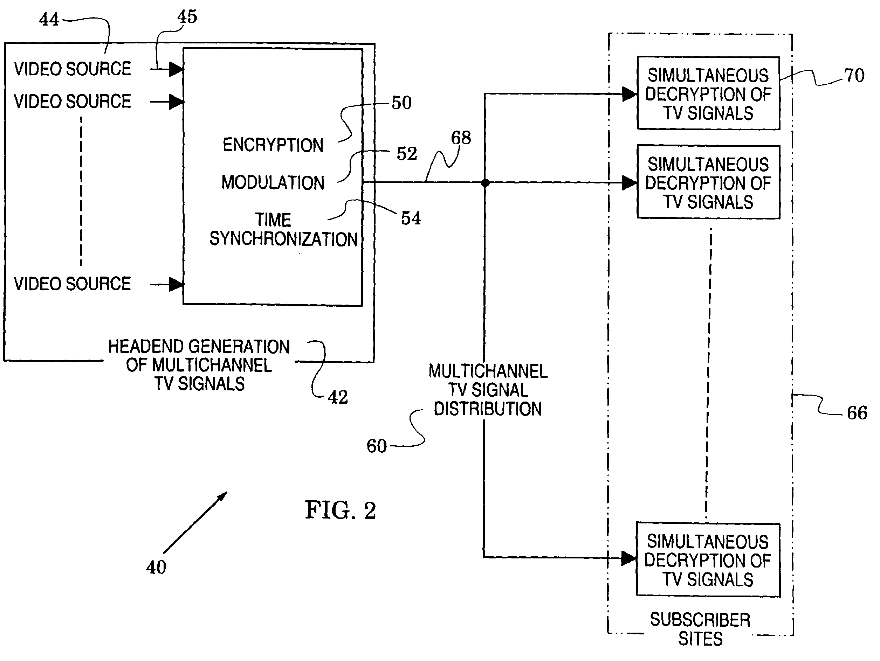

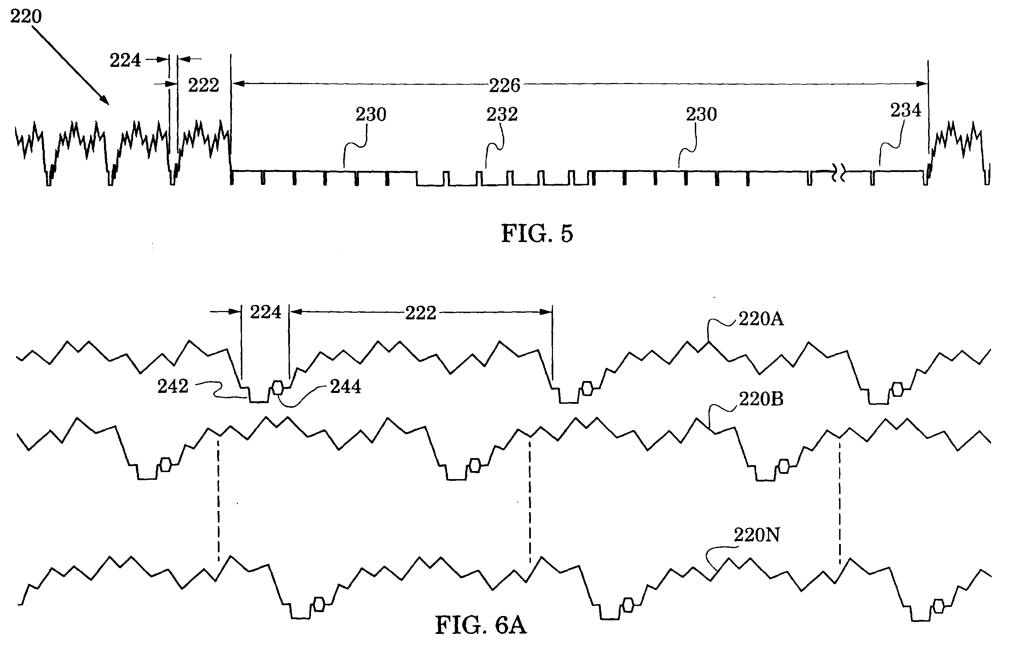

An encryption/decryption process 40, in accordance with the invention, is shown in Figure 2. Television distribution systems typically include a "headend" where a plurality of television signals from different sources, e.g., satellite TV signals, standard broadcast VHF and UHF signals, are captured, combined and fed into the system. In the process 40, headend generation 42 of multichannel TV signals begins with a plurality of video sources 44 which each provide a composite video signal 45 including picture and synchronization components (as shown in Figure 5 and further described below).

The composite video signals 45 are encrypted 50 and used to modulate 52 separate channels to place them into separate frequency channels for distribution. In addition, a process of time synchronization 54 is imposed to place like components of the composite video signals 45 in a predetermined time relationship.

Distribution 60 to subscriber sites 66 of the signals generated at the headend may then be accomplished by a variety of well known processes, e.g., cable transmission or wireless over-the-air transmission, as a common RF signal 68 that contains each composite video signal in a distinct frequency slot. Because of the time synchronization 54 imposed at the headend, the common RF signal 68, comprised of a plurality of TV signals separated in frequency, arrive at the subscriber sites 66 in time synchronization so that decryption 70 can be performed on all signals simultaneously.

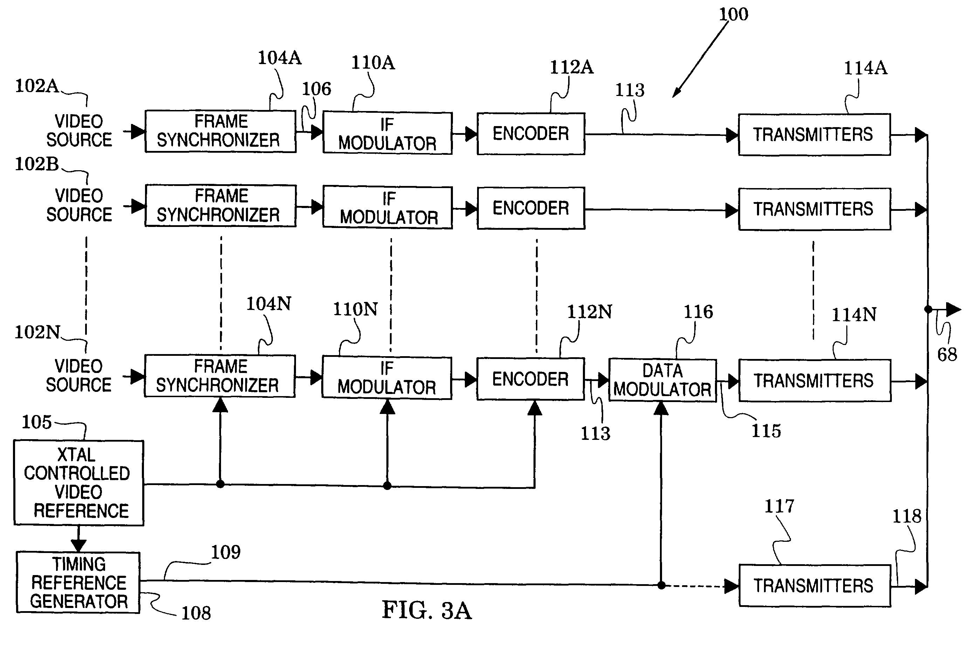

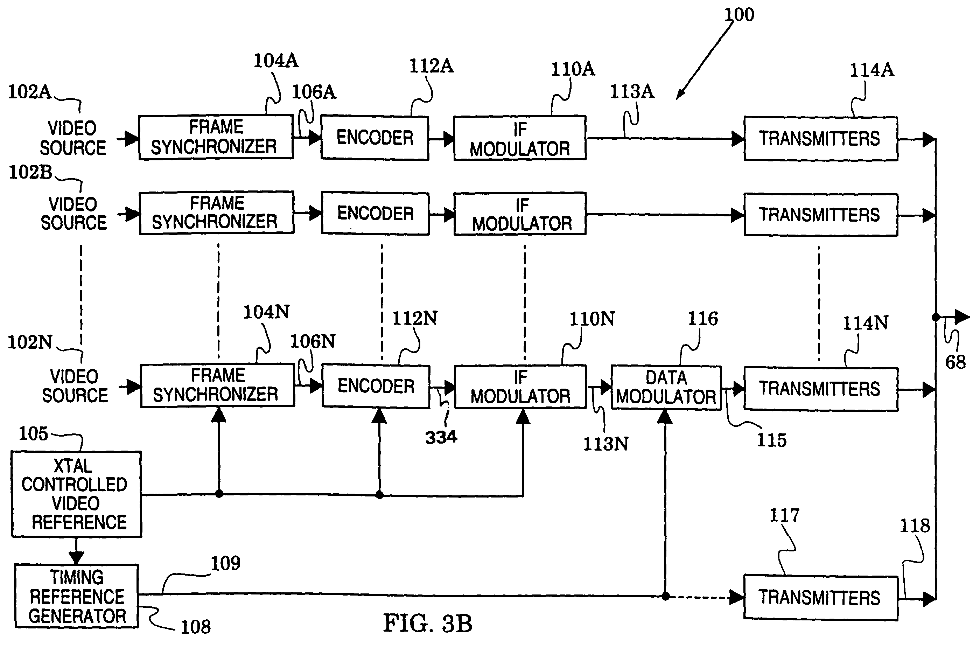

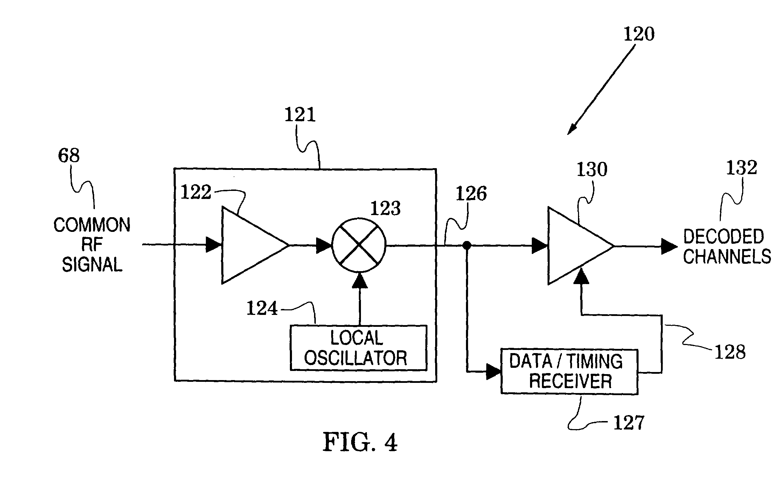

Apparatus embodiments for realizing the processes of Figure 2 are illustrated in Figures 3A, 3B and 4. Figure 3A shows a block diagram of a headend 100 in which baseband composite video sources 102A-102N are each connected to separate electronic delay devices such as frame synchronizers 104. The frame synchronizers 104 selectively delay the composite video signals from the sources 102A-102N to place like components, e.g., picture and synchronization components, in time synchronization with reference to a crystal controlled video reference 105, thus generating time synchronized composite video signals 106. The crystal controlled video reference 105 is coupled to a timing reference generator 108 used to synchronously generate a common timing reference signal 109, as described further below.

The time synchronized composite video signals 106 are used to amplitude modulate separate video IF carriers in IF modulators 110 after which encryption is accomplished by modifying IF envelopes in accordance with a selected encoding rule (code) in encoders 112, thus generating encoded IF carriers 113. Typical apparatus for envelope modification include variable gain amplifiers, variable loss attenuators and selectable signal paths having different gains. Exemplary envelope modification apparatus are disclosed in U.S. Patents 4,706,283; 4,802,214; 4,926,477; and 4,928,309, the disclosures of which are hereby incorporated by reference.

The modulators 110 and encoders 112 of Figure 3A may alternatively be interchanged, as shown in Figure 3B, to use the encoder 112 to first encode the time synchronized video signals 106 by amplitude modification in accordance with a selected encoding rule and then using the resultant signal to amplitude modulate an IF carrier with the IF modulator 110. Video amplitudes may be modified with apparatus similar to the above mentioned examples. Specific apparatus for video baseband envelope modification is disclosed in U.S. Patent 4,928,309, the disclosure of which is hereby incorporated by reference.

The encoded IF carriers 113 are preferably upconverted from a standard IF frequency and frequency multiplexed in standard TV transmitters 114 for distribution to subscriber sites as the common RF signal 68. The RF frequency slots are typically specified in accordance with industry standards. For example, a typical Multichannel Multipoint Distribution Service (MMDS) includes 33 channel slots within a transmission frequency range of 2500-2686 MHz and 2150-2162 MHz.

The timing reference generator 108 generates the common timing reference signal 109 which is transmitted with the synchronized video signals to provide master timing information for decoding synchronization. This signal is combined with a selected encoded IF carrier 113 to form a data modulated IF carrier 115, by a data modulator 116. The data modulator 116 is placed in a selected channel at the headend but it may alternatively be inserted (indicated by broken line) into a transmitter 117 to be carried by an otherwise unused RF channel 118. The data modulator 116 may alternatively be present on more than one of the video channels prior to the transmitters 114 and selectively enabled at the headend. Authorization data status (described further below) is also preferably combined with the common timing reference signal 109 and transmitted to selectively enable or disable decoding at each subscriber site.

Figure 4 illustrates a block diagram of a downconverter/decoder 120 suitable for simultaneous decryption at subscriber sites of the common RF signal 68 received from the headend 100 of Figures 3A and 3B. In the block diagram of Figure 4, downconversion electronics 121 are shown essentially comprised of an input RF amplifier 122, a mixer 123 and a local oscillator 124. The input RF amplifier 122 amplifies and buffers the common RF signal 68 that was alternatively broadcast or distributed via cable from the transmitters 114 of Figures 3A and 3B. The amplifier 122 feeds a buffered common RF signal 126 to the mixer 123 which downconverts the buffered common RF signal 126 using the local oscillator 124, generating a downconverted common RF signal 126. In a preferred embodiment, the common RF signal 68 is received via a microwave antenna (not shown) and subsequently downconverted via the downconversion electronics 121 as disclosed in a commonly assigned, copending application to Joel J. Raymond et al., Ser. No. 08/131,081, which is incorporated herein by reference.

From the downconverted common RF signal 126, the common timing reference signal (109 in Figures 3A and 3B) is recovered in a data/timing receiver 127. This receiver 127 also stores a decoding rule which is the inverse of the selected encoding rule used in the encoders 112 of Figures 3A and 3B. Specific structure in the receiver 127 for recovery of the common timing reference signal 109 is primarily dependent upon the type of timing signal selected. Exemplary recovery structures are disclosed in U.S. Patents 4,706,283; 4,802,214; 4,926,477; and 4,928,309, previously referred to above and incorporated herein.

With the common timing reference signal and the decoding rule available (and preferably after confirmation of the authorization data), the data/timing receiver 127 can apply gain control signals 128 to a variable gain amplifier/attenuator 130 which simultaneously modifies the IF carrier envelopes with signal 126 in accordance with the decoding rule to generate decoded channel signals 132. In a preferred embodiment, the variable gain amplifier/attenuator 130 is a single element that operates on a single signal derived from the common RF signal 68. It is this ability to operate upon all television signals by a single element that is referred to in this application as "simultaneous". While a preferred embodiment uses a single variable gain amplifier/attenuator 130, other embodiments may use additional variable gain/amplifiers to synchronously operate upon a signal derived from the common RF signal 68 in an equivalent manner.

Thus, the decoded channels 132 are now simultaneously available and can be distributed throughout the subscriber location for use in all television apparatus without further processing. In addition, once the data/timing receiver 127 preferably confirms the authorization data, all channels will automatically be available for use, i.e., no user interaction, such as selecting a channel for decoding, will be involved. The downconverter/decoder 120 of Figure 4 can be economically integrated to reduce subscriber costs.

The invention is further disclosed by a preferred process embodiment illustrated in Figures 6A-6G. Description of this exemplary embodiment is facilitated by reference to a typical composite television video signal 220, shown in Figure 5, as specified by television industry standards, e.g., National Television Systems Committee (NTSC).

The signal 220 of Figure 5 has picture components 222 alternating with horizontal synchronization components 224 and these components are periodically separated by vertical synchronization components 226 during a vertical synchronization interval. The vertical synchronization components 226 generally include equalizing pulses 230, vertical synchronization pulses 232 and horizontal synchronization pulses 234. As is well known, the horizontal synchronization components 224 and vertical synchronization components 226 enable television receivers to properly synchronize the picture display.

Figure 6A is an enlarged view of the picture components 222 and horizontal synchronization components 224 of a plurality of composite video signals 220A-220N. Each horizontal synchronization component 224 is seen to include a horizontal synchronization pulse 242 and, as in the case of color television, a color burst sine wave 244 (indicated by the sine wave envelope).

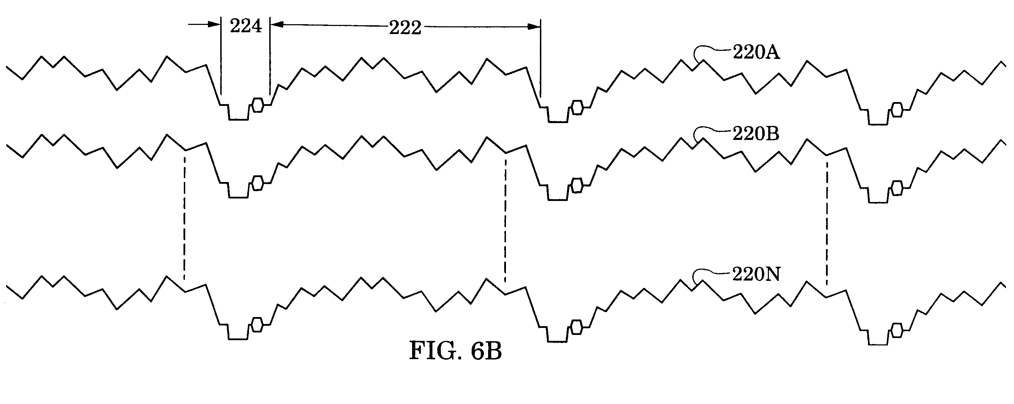

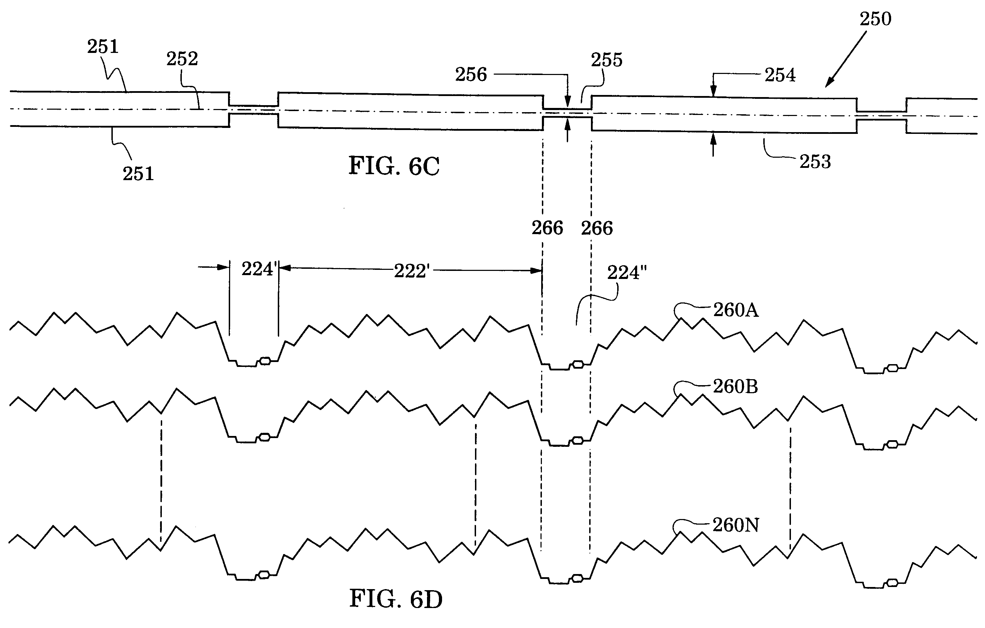

In this preferred method, like components of the video signals 220 are first aligned in time coincidence as shown in Figure 6B and their amplitude then modified in accordance with a selected encoding rule. To illustrate this amplitude modification, an exemplary encoding rule, having an encoding pattern 250 of Figure 6C, will be used.

The pattern 250 is visually indicated by two lines 251 equally vertically spaced about a centerline 252 in which the vertical spacing between lines 251 indicates gain. Thus, the pattern 250 has segments 253 with a gain 254 interleaved with segments 255 having a decreased gain 256. The encoding pattern 250 is synchronized with the composite video signals 220A-220N of Figure 6B to have gain segments 253 and gain segments 255 time coincident respectively with picture components 222 and horizontal synchronization components 224.

The pattern 250 and the particular time synchronization described above are for illustrative purposes only; any encoding rule and time synchronization may be used that will prevent unauthorized television receivers from properly displaying the video signal.

When the amplitudes of the video signals 220A-220N are modified in accordance with the encoding pattern 250, a plurality of encoded video signals 260A-260N is produced having picture components 222' and horizontal synchronization components 224' as shown in Figure 6D. Synchronism between one of the gain segments 255 and a corresponding horizontal synchronization component 224'' is indicated by the broken lines 266. Thus, in the encoded composite video signals 260A-260N, the horizontal synchronization components 224 are reduced relative to the other video components.

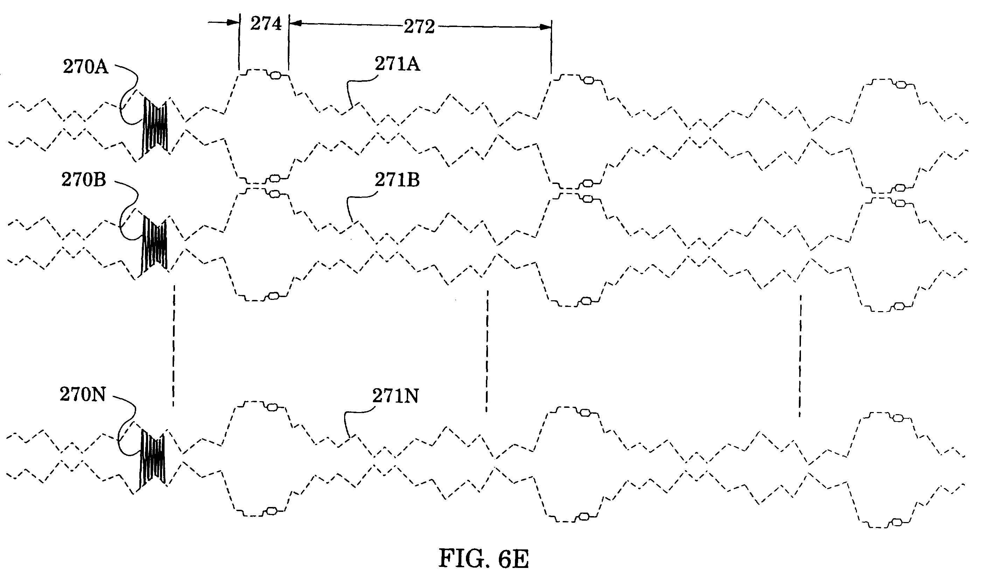

In Figure 6E, a plurality of video IF (intermediate frequency) carriers 270A-270N have each been amplitude modulated with a different one of the encoded video signals 260A-260N to have amplitude envelopes 271A-271N as shown in broken lines. The modulated video IF carriers thus have portions corresponding to the components of the encoded composite video signals 260 of Figure 6D, e.g., picture portions 272 and horizontal synchronization portions 274 correspond respectively to picture components 222' and horizontal synchronization components 224'.

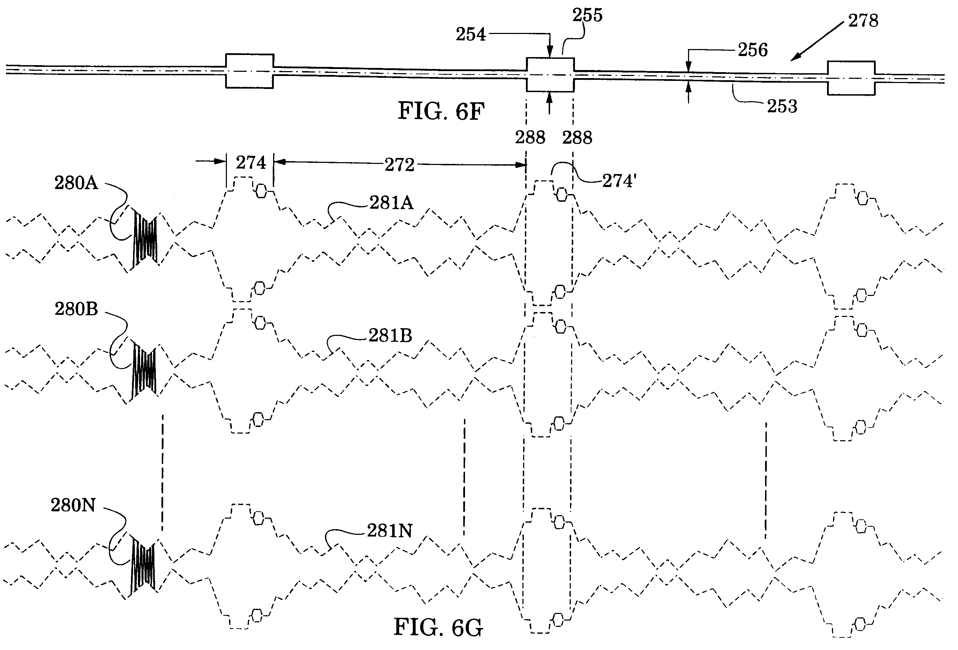

In the preferred method, upon receipt at a subscriber site, the video IF carriers 270A-270N are simultaneously shaped in accordance with the inverse of the encoding pattern 250. Figure 6F illustrates this inverse as the decoding pattern 278 in which the gains 254, 256 have been inverted, i.e., segments 255 now have the increased gain 254 while segments 253 have the decreased gain 256.

The decoding pattern 278 is synchronized with the modulated video IF carriers 270 of Figure 6E in the same manner as was done with the encoding pattern 250 of Figure 6C and the composite video signals 220 of Figure 6B, i.e., gain segments 253 and gain segments 255 are made time coincident respectively with picture portions 272 and horizontal synchronization components 274.

As shown in Figure 6B, when the amplitudes 271A-271N of Figure 6E are modified in accordance with the decoding pattern 278, a plurality of video IF carriers 280A-280N, with amplitude envelopes 281A-281N, are produced each having picture portions 272 and horizontal synchronization portions 274 which conform respectively with the picture components 222 and horizontal synchronization components 224 of Figure 6B. Synchronism between one of the gain segments 255 and a corresponding horizontal synchronization portion 274' is indicated by the broken lines 288. Thus, all video IF carrier signals have been simultaneously decoded at the subscriber site without any change in frequency allocation and are simultaneously available for use.

In Figures 6C, 6D and Figures 6F, 6G, the synchronism between the inverse decoding rule 280 and video IF portions 272, 274 was specified to be the same as between the encoding rule 250 and corresponding video components 222, 224. As previously discussed, this synchronism is realized with a common timing reference signal synchronous with the encoding which is then recovered at the subscriber site for synchronizing the decoding of the encoded signals. Typical modulation methods for carrying timing reference signals on IF or RF carriers include amplitude modulation, frequency shift keying and phase shift keying. A preferred embodiment employing frequency shift keying is described further below. The common timing reference signal may preferably be inserted in synchronization components, i.e., horizontal or vertical, to avoid disturbing picture information. The common timing reference signal is preferably combined with authorization data which is coded into one or more video IF carrier signals.

In the preferred method embodiment, illustrated in Figures 6A-6G, generation of the video carriers with encoded amplitudes 271A-271N, as shown in Figure 6E, followed the sequence of video signal time alignment, amplitude modification of video signals in accordance with a selected encoding rule and modulation of video IF carriers with the encoded video signals. It should be apparent, however, that other method embodiments, in accordance with the invention, may employ other equivalent sequences, e.g., the sequence previously described and shown in Figures 3A and 3B.

Also, the illustrated preferred method embodiment simultaneously decodes modulated IF carriers. It should be apparent to those skilled in the art that equivalent method embodiments may include transmission techniques such as the upconversion of each IF carrier to one of a plurality of RF frequency signals followed by frequency multiplexing. The resulting RF frequency signals may then be modified in accordance with the inverse of the selected encoding rule to simultaneously decode the video signals carried therein. Both IF and RF signals may be generically referred to as channel signals.

Although the encryption/decryption process shown in the preferred embodiments has been specifically directed to amplitude modification of analog video signals, the teachings of the invention may generally be extended to encryption/decryption of other forms of video signals, e.g., bit streams resulting from digitization of analog video signals. Also, although horizontal sync suppression has been shown as an encoding method, other encoding methods are also recognized within the scope of the present invention, including vertical sync suppression and horizontal and vertical sync suppression.

In addition, the illustrated preferred method embodiment aligned corresponding video components in time coincidence for simultaneous decryption at subscriber sites but other embodiments of the invention may synchronize (i.e., place in a predetermined time sequence) corresponding video components for synchronous decryption at subscriber sites.

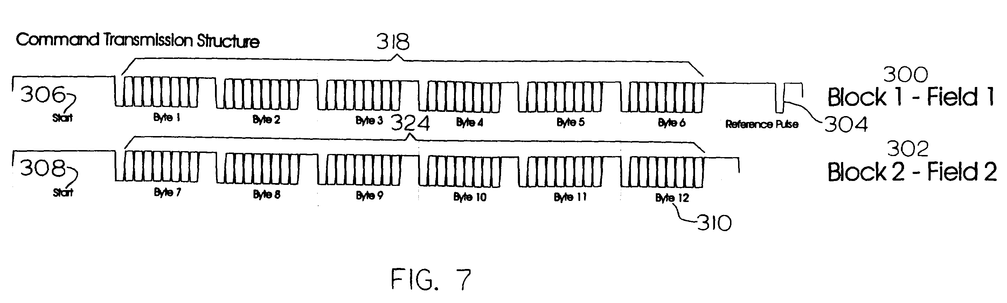

With reference now to Figure 7, there is shown a diagram of a preferred command transmission structure of the data that is added to a selected television channel for providing synchronization and the authorization data. The basic structure of the authorization data is preferably comprised of twelve data bytes, divided into two data blocks 300 and 302 of six bytes each, corresponding to the two interlaced fields which form a single video frame and a precisely placed reference pulse 304 used to provide timing information for decrypting the common RF signal 68. Additionally, start sequences 306 and 308 are provided to identify the start of each data block. The data bytes are preferably used to identify authorized individuals or groups of authorized subscribers to the otherwise encrypted service. At least one byte is preferably included as a validity check byte 310 for the authorization data. Additionally, the validity check byte 310 may be used to determine valid receive timing synchronization.

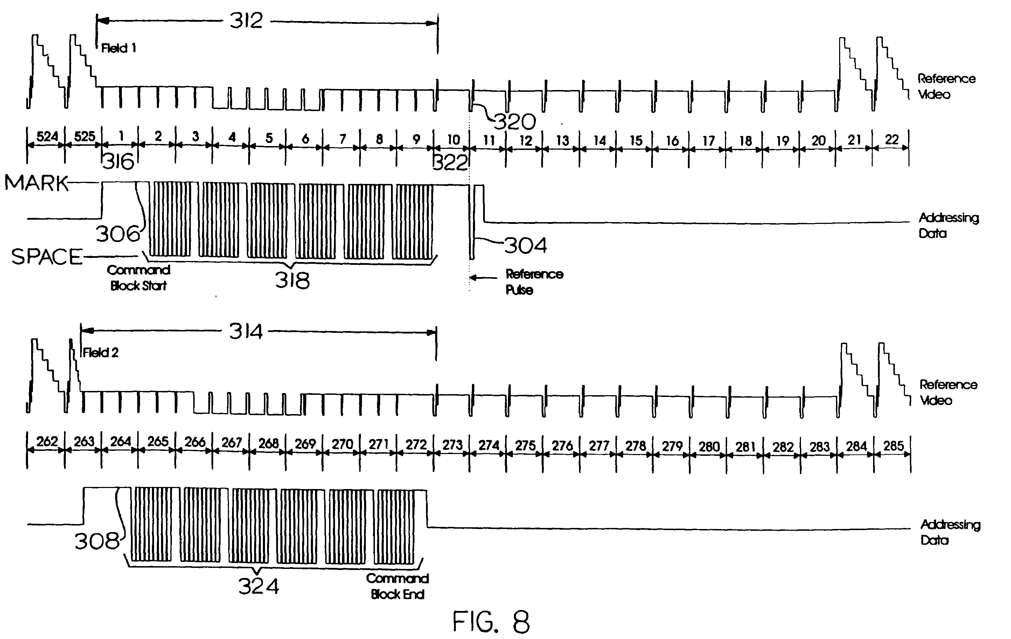

In a typical 525 line, 60 Hz television signal, as shown in Figure 8, a video frame is comprised of 525 interlaced horizontal lines of video information, divided into two fields at a 30 Hz frame rate. The beginning of each field is signified by vertical sync components 312 and 314, defining a vertical synchronization interval, that cause a vertical retrace during which the screen is blanked. Video information need not be present during the vertical synchronization interval since the screen is blanked. Thus, as shown in Figure 8, a preferred embodiment uses the vertical synchronization interval, defined by vertical sync components 312 and 314 and comprised of multiple horizontal lines, to transmit the authorization data without interfering with the displayable video information. Transmission of the first data block 300, comprised of the first start sequence 306, a first set of data bytes 318, six data bytes in a preferred embodiment, and the reference pulse 304, begins with the time period defined by the first horizontal line 316. While the data transmission protocol is otherwise tolerant to timing variations, the reference pulse 304 is precisely synchronized with a horizontal sync pulse 320 that follows the tenth horizontal line 322. The transmission period for the first data block 300 is contained within the time period for horizontal lines 1-10, as shown in Figure 8. Similarly, the transmission period of the second data block 302, comprised of the second start sequence 308 and a second set of data bytes 324, six data bytes in a preferred embodiment, is contained within horizontal lines 263-272.

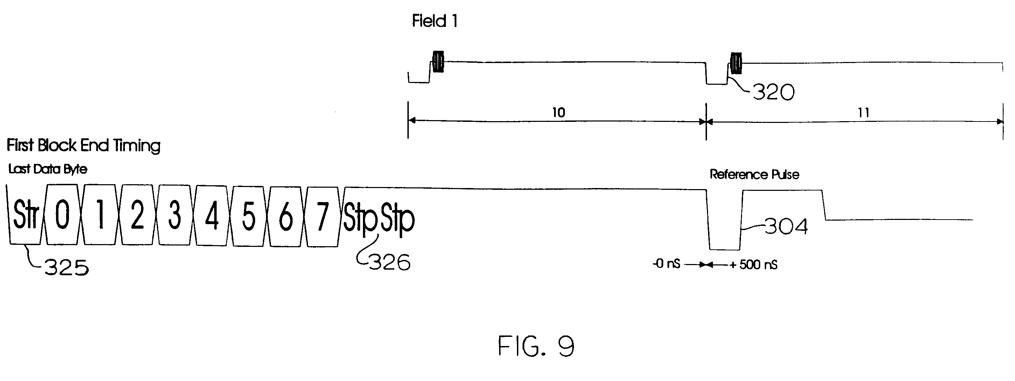

Using means discussed below, data is modulated onto a selected television channel during the previously described vertical synchronization interval. As shown in Figures 7, 8 and 9, this data is defined as a combination of bits comprised of marks, i.e., "1"s or "high"s, and spaces, i.e., "0"s or "low"s. However, outside of these prescribed periods, data values are undefined and potentially susceptible to erroneous detection as marks or spaces. To avoid these errors, the start sequences 306 and 308 are used in combination with the validity check byte 310 to define detection periods corresponding to horizontal lines 1-10 and 263-272. The start sequences 306, 308 are each defined by a series of unique data bits, all "1"s in a preferred embodiment. Each data byte within the first and second sets of data bytes, respectively 318 and 324, are preferably transmitted as 8-bit characters according to a conventional 11-bit asynchronous protocol, as shown in Figure 9, with one low start bit 325 and two high stop bits 326 per character. As is common with asynchronous character transmission protocols, the time each character is transmitted is not precisely fixed in time. However, a transmission rate is chosen that permits the transmission of an 11-bit start sequence 306, six 11-bit characters 318 and still provide sufficient time to precisely place the reference pulse 304 in synchronization with the horizontal sync pulse 320 following the tenth horizontal line 322. In a preferred embodiment, a bit rate of 140,625 bps is used. While, the reference pulse 304 is described here in reference to a particular video signal, e.g., 220B, it should be recognized that since all of the video signals 220A-220N are synchronized by frame synchronizers 104, the reference pulse 304 will be precisely synchronized to the horizontal sync pulse following the tenth line for all of the video signals.

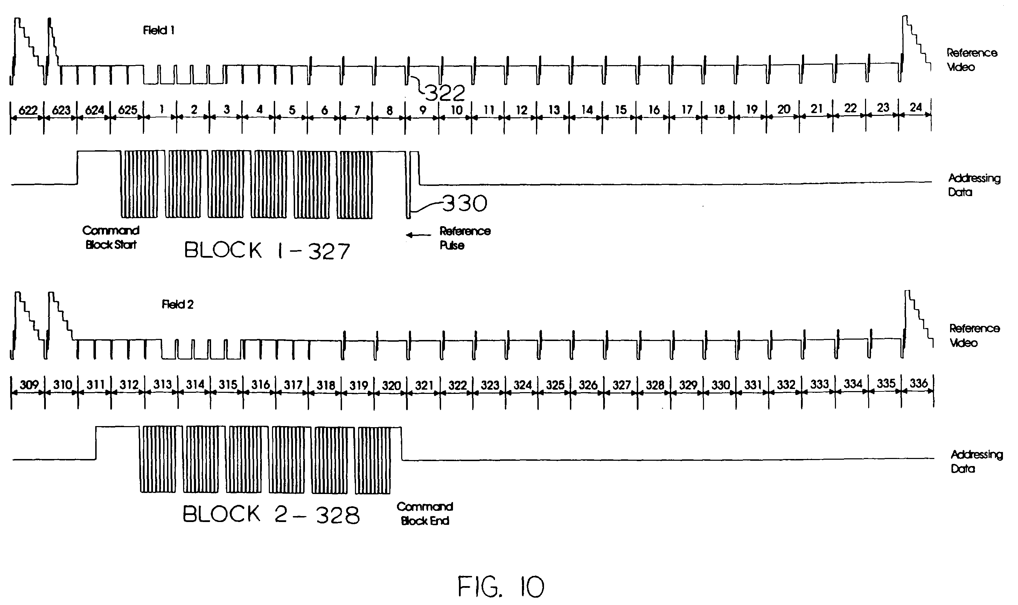

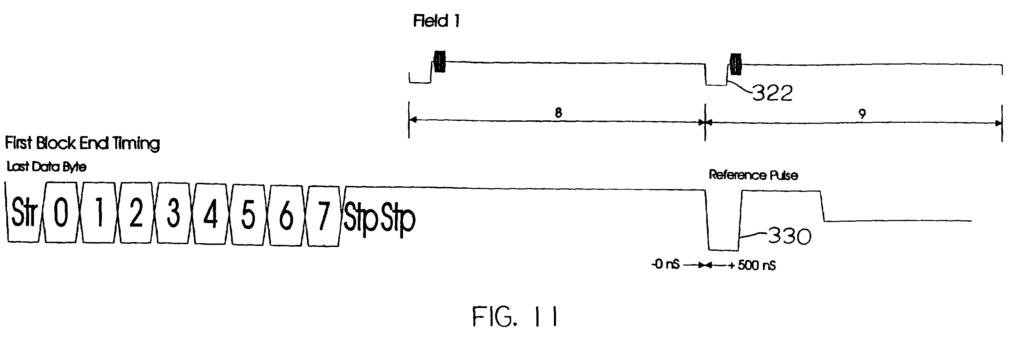

With reference to Figures 10 and 11, there is shown the interrelationships of the video information and the authorization data for a television signal which uses 625 lines at a 25 Hz frame rate to represent each video frame. In such a television signal, as shown in Figure 10, a first data block 327 is placed within horizontal lines 624 and 9 and a second data block 328 is placed within horizontal lines 311 and 320. The reference pulse 330 is precisely placed in synchronization with the horizontal sync pulse following the eighth line 332.

In a preferred embodiment, the television channel selected for transmitting the authorization data is fixed, e.g., always set to a predetermined channel N. However, the downconverter/decoder 120 is preferably configured to scan channels within its frequency range to identify the channel containing the authorization data. Alternate embodiments may alter the data channel selection according to a predetermined algorithm, e.g., a different channel for each time period, a first data channel identifies a next data channel, etc. As discussed in reference to Figures 3A and 3B, the common timing reference signal 109 can alternatively be coupled to any one or all of a plurality of data modulators 116. A select signal (not shown) can optionally enable a particular data modulator 116 to add the common timing reference signal 109 to a selected channel.

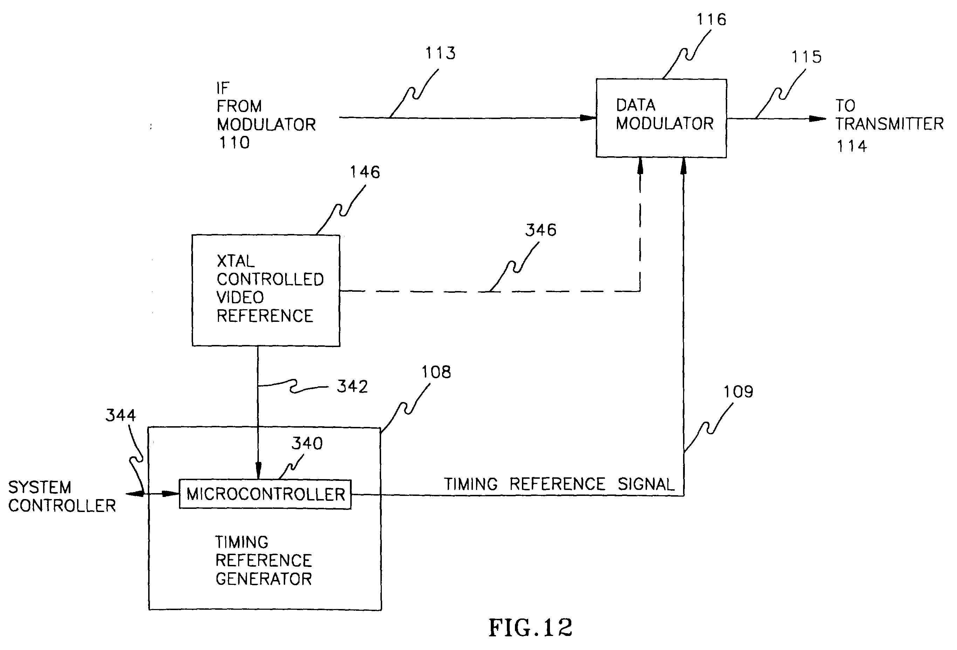

With reference now to Figure 12, there is shown an expanded block diagram of a portion of the encryption processing of video channel N, as shown in Figure 3B, showing the interface of the encoder 112N and the IF modulator 110N to the data modulator 116. In a preferred embodiment, the encoder 112N applies a selected encoding rule, e.g., removing the horizontal and vertical synchronizing components 224, 226 from a time synchronized video signal 106N, to disable subscribers without authorized decoders from receiving a video channel. An encrypted video signal 334 is then modulated by the IF modulator 110N, generating the encoded IF carrier 113N. In a preferred embodiment, the encoded IF carrier 113N from the IF modulator 110N is modulated by the data modulator 116 during the time period corresponding to the vertical synchronizing component 226, i.e., the vertical synchronization interval, in response to the common timing reference signal 109 and sent via the data modulated IF carrier 115 to the transmitter 100N. As described above, the data modulator 116 is only present on a selected channel 1-N in a preferred embodiment. In another embodiment, the data modulator 116 may be present for all N channels but may be enabled only for the selected channel or alternatively for a plurality of channels. Alternatively, a single data modulator 116 may be switched to the selected channel.

The timing reference generator 108, under control of a microcontroller 340, generates the common timing reference signal 109 in synchronism with a clock 342 received from the crystal controlled video reference 105. As previously discussed, the common timing reference signal 109 additionally preferably comprises the authorization data for specifying authorized subscribers. Authorization information is maintained in a system controller (not shown) and communicated via signal path 344 to the microcontroller 340 where it is formatted as the authorization data onto the common timing reference signal 109. In a preferred embodiment, the common timing reference signal 109 contains three data states corresponding to no data, a mark and a space, thus causing the data modulator 116 to alter the encrypted IF signal 113 on receipt of a mark or space but leave the encrypted IF signal 113 unaltered when receiving a third, no data, state signal. Alternatively, the crystal controlled video reference 105 delivers a sync signal 346 to the data modulator 116 to enable data modulation only during the vertical synchronization interval.

In a preferred embodiment, the data modulator 116 uses FSK (frequency shift keying) to modulate the encoded IF carrier 113 of a selected MMDS channel with the authorization data and the reference pulse 304 during the vertical synchronization interval. The encoded IF carrier 113, as input to the data modulator 116, is either separate video and separate audio modulated IF carriers, or the combined video and audio modulated carriers. In addition, the data modulator 116 receives the common timing reference signal 109, comprised of the reference pulse 304 and the authorization data comprised of sets of data bytes 318 and 324 used to authorize or deauthorize each subscriber. The outputs of the data modulator 116 are the audio and video carriers, FM modulated with the sets of data bytes 318 and 324 and the reference pulse 304 during the vertical synchronization interval.

The preferred data modulator 116 is characterized by: 1) the difference between the output frequencies of the modulated carriers are the same as their respective input carrier frequencies, 2) the system should not add noise or distortion to the modulated carriers, and 3) the audio and video carriers should match in deviation and phase. Since the audio carrier is typically produced as a beat frequency between the audio and video IF carriers, if the audio and video IF carriers do not match in phase and maintain the frequency difference of the original carriers, an unwanted hum could be produced.

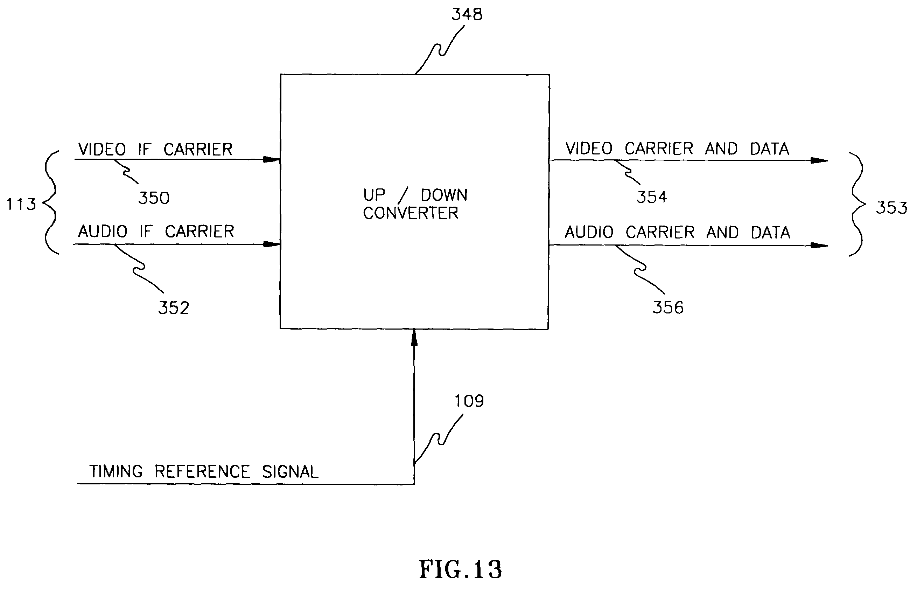

With reference now to Figure 13, there is shown a top level block diagram of an up/down converter embodiment 348 of the data modulator 116. In this embodiment, the encoded IF carrier 113 is comprised of a separate video IF carrier 350 and audio IF carrier 352. In an exemplary embodiment, the video IF carrier 350 and the audio IF carrier 352 are typically at 45.75 MHz and 41.25 MHz, respectively, and are nominally separated in frequency by 4.5 MHz. The reference IF carrier 353, generated by the up/down converter 348, is comprised of a separate video carrier+data signal 354 and audio carrier+data signal 356, both of which are uniformly FSK modulated in response to the common timing reference signal 109. In a preferred embodiment, the data responsive frequency deviation for the carriers 350 and 352 is ±25 KHz.

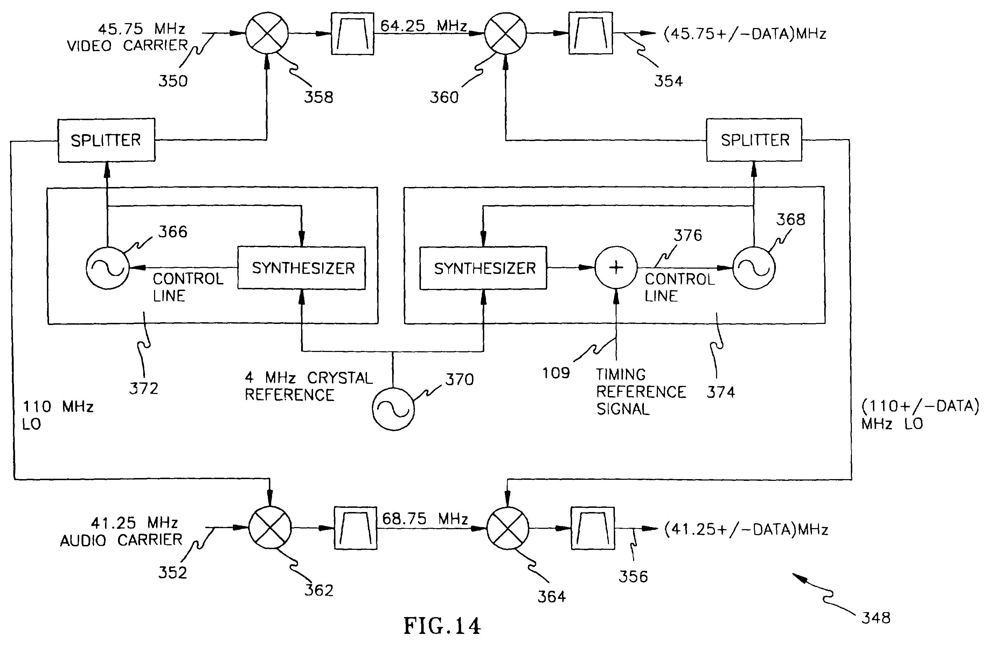

In Figure 14, a detailed block diagram of a preferred up/down converter 348 is shown. The up/down converter 348 consists of a two pairs of mixers 358, 360 and 362, 364, one pair for each carrier, i.e., video 350 and audio 352, under control of a common pair of local oscillators. First and second oscillators 366 and 368 are VCOs (voltage-controlled oscillators) phase locked to a common crystal oscillator 370. The first oscillator 366 functions as a local oscillator (LO) 372 to mix each carrier up to an intermediate frequency and the second oscillator 368 functions as a second local oscillator 374 to mix the signal back down to its original IF frequency. In the process of downconversion, the second local oscillator 374 is frequency modulated with the data from the common timing reference signal 109. Since the second local oscillator 374 changes frequency in response to the common timing reference signal 109, the downconverted carriers 354 and 356 also change frequency and additionally contain FSK data providing synchronization and the authorization data.

The second local oscillator 374 used for the second downconversion is frequency modulated as follows. The phase locked loop of the VCO 368 is used in the second downconversion. The common timing reference signal 109 is summed onto a control line 376 of this VCO 368. Since the modulated VCO 368 is used as the local oscillator 374 for the downconversion, the RF carriers 354 and 356 are also modulated and thus contain the FSK data.

In Figure 14, the audio and video carriers are separate and thus, this same process is performed in parallel on both the video and audio carriers 350 and 352 using the same two local oscillators 372 and 374. Signals from each oscillator 372, 374 are split and respectively sent to two mixers 358, 362 and 360, 364. The audio carrier 352 is upconverted using the first local oscillator 372 and then downconverted to the original IF frequency using the FM modulated second local oscillator 374. Since the same frequency modulated local oscillator 374 is used in the downconversion of the audio and video carriers, the frequency deviation of both carriers will be essentially identical.

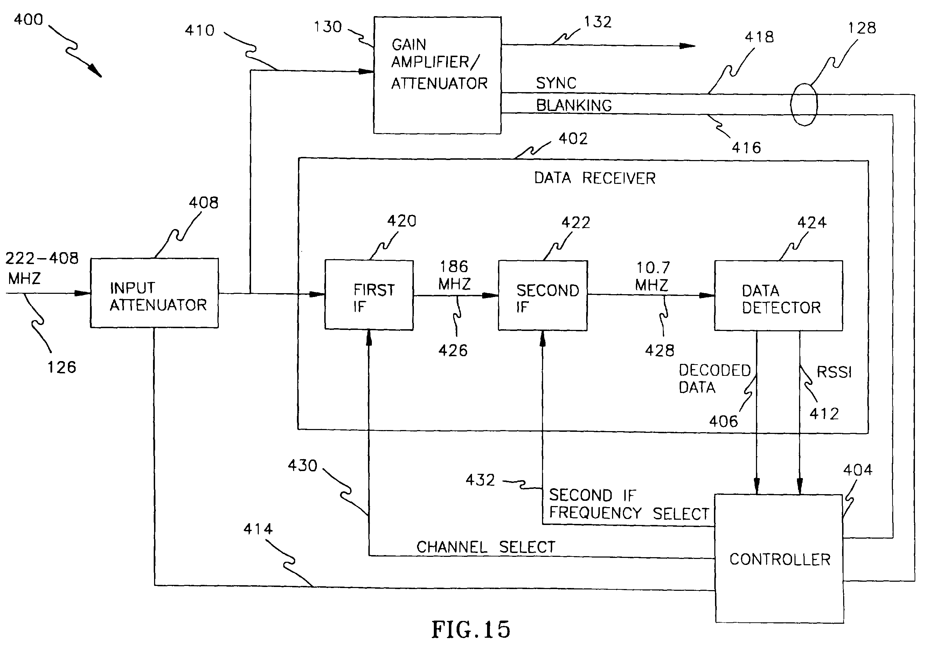

With reference now to Figure 15, there is shown a preferred embodiment of a decoder portion 400 of the downconverter/decoder 120, as described in reference to Figure 4. As previously described, the decoder portion 400 receives the downconverted common RF signal 126, recovers the common timing reference signal 109 contained within using the data/timing receiver 127, and in response generates gain control signals 128 to instruct the gain amplifier/attenuator 130 to operate upon the downconverted common RF signal 126 according to the inverse of the selected encoding rule, e.g., reinserting horizontal and vertical components, to generate the decoded channels signal 132. The decoded channels signal 132 can be distributed to one or more standard TV receivers which can independently receive one or more decoded TV channels.

The data/timing receiver 127 is preferably comprised of a superheterodyne dual conversion FSK data receiver 402 under control of a controller 404. The controller 404, receives a decoded data output signal 406 from the data receiver 402 and generates frequency control signals to phase lock the data receiver 402 to the decoded data output signal 406. Additionally, the data/timing/receiver 127 preferably comprises an input attenuator 408 that accepts the downconverted common RF signal 126 and, under control of the controller 404, generates a common attenuated signal 410 to the data receiver 402 and the gain amplifier/attenuator 130. The controller 404 additionally receives a receive signal strength indicator (RSSI) 412 from the data receiver 402 and responsively generates an attenuation control signal 414 to the input attenuator 408. The controller additionally generates gain control signals 128 to the gain amplifier/attenuator 130 are comprised of a blanking control line 416 and a sync control line 418 for reinserting the vertical and horizontal sync signals, respectively, into the common attenuated signal 410 which is derived from the downconverted common RF signal 126.

The data receiver's 402 principal purpose is to retrieve the common timing reference signal 109 from a selected channel within the common attenuated signal 410 and to deliver the common timing reference signal 109 as the decoded data output signal 406, representative of the authorization data and the precisely timed reference pulse 304. The data receiver 402 is comprised of a first IF 420, a second IF 422 and a data detector 424. The first IF 420, receives the common attenuated signal 410, typically having a frequency range of 222 to 408 MHz corresponding to CATV channels 24 to 54, and downconverts the selected channel to a fixed frequency first IF output signal 426. The second IF 422 then further downconverts the first IF output signal 426 to a fixed frequency second IF output signal 428. The second IF output signal 428 is input to the data detector 424 which extracts the decoded data output signal 406 and the receive signal strength indicator 412. The channel selection is determined by the controller 404 by scanning the available channels for data. To scan the available channels, the controller 404 generates a channel select signal 430 to the first IF 420 which determines the amount of frequency downconversion required for the common attenuated signal 410. The channel select signal 430 is iteratively altered until data is successfully received. Additionally, the controller 404 generates a second IF frequency select signal 432 to the second IF 422. In a preferred embodiment, the operating frequencies of the first IF 420 and the second IF 422, as determined by the channel select 430 and second IF frequency select 432 signals are adjusted by the controller 404 in response to the decoded data output signal 406, thus phase locking the data receiver 402 to the data contained within, i.e., the common timing reference signal 109.

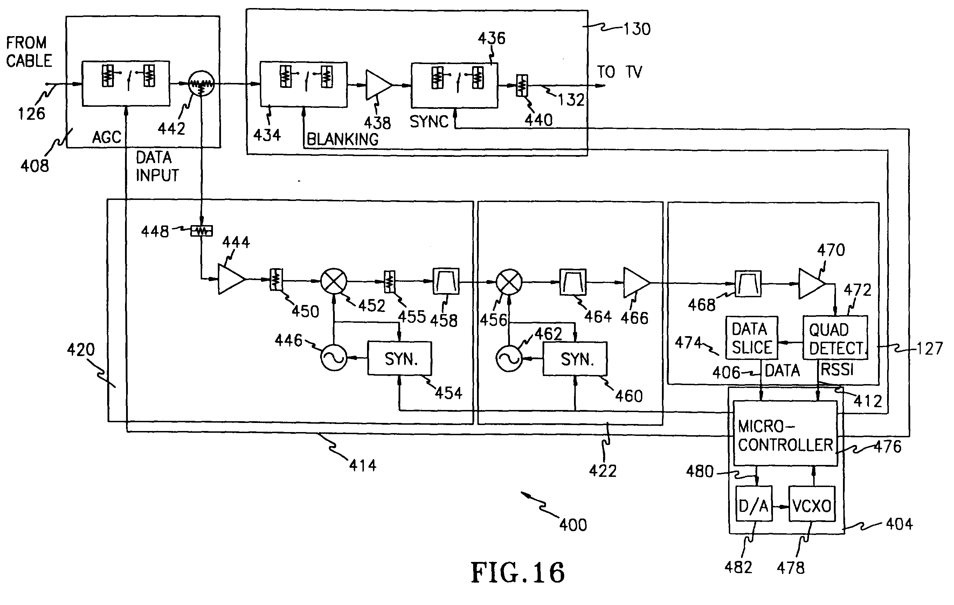

Figure 16 shows a detailed block diagram of an exemplary embodiment of the decoder 400 of Figure 15, comprised of the first IF 420, the second IF 422 and the data detector 424, that sends data to the controller 404 that in turn controls the gain amplifier/attenuator 130, comprised of two switchable RF attenuators, to re-insert sync and blanking signals directly on cable TV frequencies. In a preferred embodiment, video channels contained within the downconverted common RF signal 126 do not contain horizontal or vertical sync pulses. In addition, the horizontal blanking level corresponding to each channel within the common RF signal 68 is preferably attenuated to prevent detection circuitry of some TV receivers from using the blanking signal as a false sync reference. During the vertical synchronization interval, the blanking level is not attenuated by the encryption. The decoder 400 performs the inverse of the selected encoding rule to restore the sync and blank signals to proper levels using a pair of two level RF attenuators, a blanking switch 434 and a sync switch 436. An amplifier 438 isolates the blanking and sync switches 434, 436 to prevent signal interactions. The amplifier 438 is preferably a linear amplifier capable of handling multiple high level carriers with low distortion. A pad 440 helps to isolate the sync switch 436 from poor external impedance matching.

The input attenuator 408 is activated when the downconverted common RF signal 126 reaches a certain level. This prevents distortion of both the gain amplifier/attenuator 130 and the data/timing receiver 127. The receive signal strength indicator 412, generated by the data detector 424, provides information for the controller 404 to determine at what level to switch in the input attenuator 408 via the attenuator control signal 414.

A resistive splitter 442 provides a signal to both the gain amplifier/attenuator 130 and the first IF 420. The resistive splitter 442 also helps to isolate and prevent interaction with the input attenuator 408.

The data receiver front end includes a high isolation amplifier 444 to isolate a first local oscillator 446. A pad 448 at the input of the amplifier 444 prevents distortion of the amplifier 444 from the multiple carriers within the downconverted common RF signal 126. A pad 450 at the output of the amplifier 444 provides an easy broadband match to the input of a first mixer 452 and also prevents distortion. Both attenuators 448 and 450 also help isolate the first local oscillator 446.

The first mixer 452 and the first local oscillator 446 combination provide a programmable local oscillator frequency range. The data carrier can be any of the video carriers in this band. The IF frequency is preferably chosen to avoid mixing of carriers within the frequency range.

A frequency synthesizer 454 keeps the first local oscillator 446 in phase lock while receiving a reference frequency from the controller 404. The frequency synthesizer 454 is preferably capable of tuning the first local oscillator 446 using the channel select signal 430 from the controller 404. In a preferred embodiment, the controller 404 iteratively tunes the first local oscillator 446 until data is successfully received. Alternatively, the controller 404 is preset to a value for tuning the first local oscillator 446. A pad 455 follows the first mixer 452 to prevent overloading a second mixer 456 as well as to provide a good input termination for an image filter 458.

The second IF 422 is chosen to produce and demodulate an IF frequency, e.g., 10.7 MHz, for which ceramic bandpass filters are readily available. A second frequency synthesizer 460, identical to the first frequency synthesizer 454, is used to phase lock a second local oscillator 462. A first ceramic filter 464 follows the second mixer 456 and sets the demodulation bandwidth.

An IF amp 466 follows the first ceramic filter 464 and helps to limit the signal. A second ceramic filter 468 follows the IF amp 466 for additional band shaping. A gain limiter amplifier 470 follows the second ceramic filter 468 for hard limiting. A quadrature detector 472 follows the limiter amplifier 470 and demodulates the FSK data. The input signal preferably deviates ±25 KHz and has a data rate of 140,625 bits per second. Demodulated data from the quadrature detector 472 enters a data slicer 474 where uncertain data edges are cleaned up, made absolute and fed to the controller 404 as the data output signal 406.

In order to perform the inverse of the selected encoding rule, e.g., to insert the sync and blanking signals, at precisely the correct position in time, the controller 404 is phase locked to the time reference provided from the synchronized signals at the headend. This time reference, originally generated from the common timing reference signal 109 at the headend, becomes available to the controller 404 as part of the demodulated data signal 406. In this exemplary embodiment, the controller 404 performs the inverse of the selected encoding rule with a sync and blank generator that locks itself to the edge of a received reference pulse to avoid sync drift. In a preferred embodiment, this locking is accomplished by altering the clock frequency of the controller 404. In Figure 15, it is shown that the controller 404 is comprised of a processor 476, preferably a microcontroller, executing software at a rate controlled by a voltage controlled crystal oscillator 478. The processor 476 sends a feedback signal 480 to a digital to analog converter 482 which drives the voltage controlled crystal oscillator 478 and effectively changes the clock frequency and thus the execution speed of the processor 476. By responsively altering the execution speed of the processor 476 in response to the decoded data output signal 406, the channel select 430 and the second IF frequency select signals 432 are thus responsively altered, phase locking the data receiver 402 to the decoded data signal 406.

As discussed in reference to the data modulator 116, data is only sent during prescribed periods, the vertical synchronization intervals. The controller 404, under software control, recognizes the reference pulse 304, and a combination of the first start sequence 306, the second start sequence 308 and the validity check byte 310, to ensure that the controller 404 is synchronized with the common timing reference signal 109. When an error is encountered, the controller 404 alters its clock frequency and/or the time window during which is looks for the data blocks 300 and 302.

From the foregoing it should now be recognized that encryption/decryption method and apparatus embodiments have been disclosed herein which make a plurality of distributed television channels simultaneously and automatically available to authorized subscribers.

## Claims

1. A method of distributing multiple video signals, each produced by a different video source at a system headend and each containing picture and synchronization components, to a plurality of subscriber sites located remote from said headend, said method comprising the steps of:
generating at said headend multiple carrier signals;
modulating at said headend each of said carrier signals with a different one of said video signals to form multiple channel signals, all of said channel signals having their respective video signal synchronization components in time coincidence;
generating a common timing reference signal (109) sychronous with said time coincident synchronization components;
causing each of said channel signals to be encrypted at said headend in accordance with a common predetermined encoding rule;
distributing said multiple encrypted channel signals and said common timing reference signal (109) from said headend to said subscriber sites as a common RF signal wherein said multiple channel signals define an RF band and said common timing reference signal (109) is within said band; and
responding at each subscriber site to said common timing reference signal (109) to simultaneously decrypt all of the channel signals distributed thereto by operating upon said common RF signal with a single broadband decoder (400; 424) in accordance with the inverse of said encoding rule to recover multiple decrypted channel signals for direct simultaneous application to a conventional television receiver.

2. The method of claim 1, wherein said decrypting step includes the step of synchronizing the decryption of said channel signals with said common timing reference signal (109).

3. The method of claim 1, wherein said causing step includes the step of simultaneously amplitude modulating said channel signals in accordance with said predetermined encoding rule.

4. The method of claim 3, wherein said decrypting step includes the steps of:
recovering said common timing reference signal (109); and simultaneously amplitude modulating, synchronous with said common timing reference signal (109), said channel signals in accordance with the inverse of said encoding rule.

5. The method of claim 1, further comprising the step of adding authorization data to said common timing reference signal (109) before distributing said common timing reference signal (109) to said subscriber sites.

6. The method of claim 5, wherein said responding step includes extracting said authorization data from said common timing reference signal (109) at each subscriber site and enabling or disabling said decrypting step in response to said authorization data.

7. The method of claim 1, further including modulating a selected channel signal with said common timing reference signal (109) before distributing to said subscriber sites.

8. The method of claim 7, wherein said responding step includes extracting said common timing reference signal (109) from said selected channel signal by demodulating said selected channel signal.

9. The method of claim 8, wherein said modulating step comprises frequency modulation.

10. The method of claim 9, wherein each channel signal is comprised of an audio component at a first carrier frequency and a video component at a second different carrier frequency and said frequency modulation does not alter the difference between said carrier frequencies.

11. Apparatus for distributing multiple video signals, each produced by a different video source at a system headend and each containing picture and synchronization components, to a plurality of subscriber sites located remote from said headend, the apparatus comprising:
means at said headend for generating multiple carrier signals;
means at said headend for modulating each of said carrier signals with a different one of said video signals to form multiple channel signals, all of said channel signals having their respective video signal synchronization components in time coincidence;
means at said headend for generating a common timing reference signal (109) synchronous with said time coincident synchronization components;
means at said headend for causing each of said channel signals to be encrypted in accordance with a common predetermined encoding rule;
means at said headend for distributing said multiple encrypted channel signals and said common timing reference signal (109) to said subscriber sites as a common RF signal wherein said multiple channel signals define an RF band and said common timing reference signal (109) is within said band; and
means at each subscriber site responsive to said common timing reference signal (109) for simultaneously decrypting all of said channel signals distributed thereto by operating upon said common RF signal with a single broadband decoder (400; 424) in accordance with the inverse of said encoding rule to recover multiple decrypted signals for direct simultaneous application to a conventional television receiver.

12. Apparatus for distributing multiple video signals, each produced by a different video source at a system headend and each containing picture and synchronization components, to a plurality of subscriber sites located remote from said headend, the apparatus comprising:
a common video reference clock (105) for generating a common synchronizing signal and a common timing reference signal (109) synchronous therewith;
a plurality of frame synchronizers responsive to said common synchronizing signal and said video signals for generating a plurality of time synchronized video signals;
a plurality of IF modulators responsive to said time synchronized video signals for generating a plurality of modulated video signals;
a plurality of encoders responsive to said synchronizing signal for removing said synchronization components from said modulated video signals to generate a plurality of encoded video signals;
data insertion circuitry (116) at said headend for combining said common timing reference signal (109) with a selected encoded video signal;
means to distribute said encoded video signals to a plurality of subscriber sites; and
means at each subscriber site to simultaneously decode each of said encoded video signals by reinserting said synchronization components in response to said selected video signal.

13. Apparatus for distributing multiple video signals, each produced by a different video source at a system headend and each containing picture and synchronization components, to a plurality of subscriber sites located remote from said headend, the apparatus comprising:
a common video reference clock (105) for generating a common synchronizing signal and a common timing reference signal (109) synchronous therewith;
a plurality of frame synchronizers responsive to said common synchronizing signal and said video signals for generating a plurality of time synchronized video signals;
a plurality of encoders responsive to said synchronizing signal for removing said synchronization components from said video signals to generate a plurality of encoded video signals;
a plurality of IF modulators responsive to said time synchronized video signals for generating a plurality of modulated encoded video signals;
data insertion circuitry (116) at said headend for combining said common timing reference signal (109) with a selected encoded video signal;
means to distribute said encoded video signals to a plurality of subscriber sites; and
means at each subscriber site to simultaneously decode each of said encoded video signals by reinserting said synchronization components in response to said selected video signal.

14. Subscriber site apparatus for use with an apparatus in accordance with one of claims 11 to 13, said subscriber site apparatus comprising:
a timing recovery circuit (127; 402) responsive to said common timing reference signal for generating at least one sync signal (130; 418); and
a single broadband decoder (400, 424) responsive to said sync signal for simultaneously decrypting all of said channel signals in accordance with the inverse of said encoding rule to recover multiple decrypted channel signals suitable for direct simultaneous application to a conventional television receiver.

15. The apparatus of claim 14 combined with claim 12 or 13, wherein said selected encoded video signal distributed from said headend is supplemented with authorization data, said apparatus further comprising a data decoder for extracting said authorization data from said selected channel signal to enable or disable said broadband decoder in response to said authorization data.

16. The apparatus of claim 14, wherein said broadband decoder includes a variable gain apparatus used for simultaneously amplitude modulating, synchronous with said recovered common timing reference signal (109), said channel signals in accordance with the inverse of said encoding rule.

## Patentansprüche

1. Verfahren zum Verteilen von Mehrfach-Bildsignalen, von denen jedes durch eine andere Bildquelle an einer System-Endstelle erzeugt wird und Bild- und Synchronisierungskomponenten enthält, an mehrere entfernt von der Endstelle gelegene Teilnehmerstationen, wobei das Verfahren folgende Schrille umfaßt:
Mehrfach-Trägersignale werden an der Endstelle erzeugt;
jedes Trägersignal wird an der Endstelle zur Erzeugung von Mehrfach-Kanalsignalen mit einem anderen Bildsignal moduliert, wobei die Bildsignal-Synchronisierungskomponenten jedes Kanalsignals zeitlich zusammentreffen;
ein zu den zeitlich zusammentreffenden Synchronisierungskomponenten synchrones gemeinsames Zeitbezugssignal (109) wird erzeugt;
gemäß einer gemeinsamen vorgegebenen Kodiervorschrift wird jedes Kanalsignal an der Endstelle verschlüsselt;
die verschlüsselten Mehrfach-Kanalsignale und das gemeinsame Zeitbezugssignal (109) werden von der Endstelle an die Teilnehmerstationen als gemeinsames Hochfrequenzsignal verteilt, wobei die Mehrfach-Kanalsignale ein Hochfrequenzband definieren, in welchem das gemeinsame Zeitbezugssignal (109) liegt; und
an jeder Teilnehmerstation wird das gemeinsame Zeitbezugssignal (109) ausgewertet und alle an diese Teilnehmerstation verteilten Kanalsignale gleichzeitig entschlüsselt, indem ein einzelner Breitbanddecoder (400; 424) das gemeinsame Hochfrequenzsignal entsprechend der Umkehrung der Kodiervorschrift bearbeitet, um entschlüsselte Mehrfach-Kanalsignale zur direkten und gleichzeitigen Verwendung in einem herkömmlichen Fernsehempfänger zu erzeugen.

2. Verfahren nach Anspruch 1, wobei der Schrift der Entschlüsselung den Schrift der Synchronisierung der Entschlüsselung der Kanalsignale mit dem gemeinsamen Zeitbezugssignal (109) einschließt.

3. Verfahren nach Anspruch 1, wobei der Schrift der Verschlüsselung die gleichzeitige Amplitudenmodulation der Kanalsignale gemäß der vorgegebenen Kodiervorschrift einschließt.

4. Verfahren nach Anspruch 3, wobei die Entschlüsselung folgende Schritte umfaßt:
Rückgewinnung des gemeinsamen Zeitbezugssignals (109); und
die gleichzeitige, mit dem Zeitbezugssignal (109) synchrone Amplitudenmodulation der Kanalsignale gemäß der Umkehrung der Kodiervorschrift.

5. Verfahren nach Anspruch 1, wobei in einem weiteren Schritt dem gemeinsamen Zeitbezugssignal (109) vor seiner Verteilung an die Teilnehmerstationen Berechtigungsdaten hinzugefügt werden.

6. Verfahren nach Anspruch 5, wobei der Schritt der Auswertung beinhaltet, daß dem gemeinsamen Zeitbezugssignal (109) an der jeweiligen Teilnehmerstation die Berechtigungsdaten wieder entnommen werden und dabei die Entschlüsselung abhängig von den Berechtigungsdaten ermöglicht oder verhindert wird.

7. Verfahren nach Anspruch 1, wobei ferner ein ausgewähltes Kanalsignal mit dem gemeinsamen Zeitbezugssignal (109) vor der Verteilung an die Teilnehmerstationen moduliert wird.

8. Verfahren nach Anspruch 7, wobei der Schritt der Auswertung beinhaltet, daß aus dem ausgewählten Kanalsignal durch Demodulation dieses ausgewählten Kanalsignals das gemeinsame Zeitbezugssignal (109) zurückgewonnen wird.

9. Verfahren nach Anspruch 8, wobei die Modulation eine Frequenzmodulation beinhaltet.

10. Verfahren nach Anspruch 9, wobei jedes Kanalsignal auf einer ersten Trägerfrequenz eine Audiokomponente und auf einer zweiten, von der ersten abweichenden Trägerfrequenz eine Bildkomponente enthält, und die Frequenzmodulation die Differenz zwischen den beiden Trägerfrequenzen nicht verändert.

11. Vorrichtung zum Verteilen von Mehrfach-Bildsignalen, von denen jedes durch eine andere Bildquelle an einer System-Endstelle erzeugt wird und Bild- und Synchronisierungskomponenten enthält, an mehrere entfernt von der Endstelle gelegene Teilnehmerstationen, wobei diese Vorrichtung umfaßt:
an der Endstelle gelegene Mittel zum Erzeugen von Mehrfach-Trägersignalen;
an der Endstelle gelegene Mittel zur Modulation jedes dieser Trägersignale mit einem anderen Bildsignal um so Mehrfach-Kanalsignale zu erzeugen, wobei die Bildsignal-Synchronisierungskomponenten jedes Kanalsignals zeitlich zusammentreffen;
an der Endstelle gelegene Mittel zum Erzeugen eines mit den zeitlich zusammentreffenden Synchronisierungskomponenten synchronen gemeinsamen Zeitbezugssignals (109);
an der Endstelle gelegene Mittel zur Verschlüsselung jedes der Kanalsignale gemäß einer gemeinsamen vorgegebenen Kodiervorschrift;
an der Endstelle gelegene Mittel zum Verteilen der verschlüsselten Mehrfach-Kanalsignale und des gemeinsamen Zeitbezugssignals (109) an die Teilnehmerstationen als gemeinsames Hochfrequenzsignal, wobei die Mehrfach-Kanalsignale ein Hochfrequenzband definieren, in welchem das gemeinsame Zeitbezugssignal (109) liegt; und
an jeder Teilnehmerstation gelegene Mittel, die das gemeinsame Zeitbezugssignal (109) auswerten und alle an diese Teilnehmerstation verteilten Kanalsignale gleichzeitig entschlüsseln, indem ein einzelner Breitbanddecoder (400; 424) gemäß der Umkehrung der Kodiervorschrift das gemeinsame Hochfrequenzsignal bearbeitet, um entschlüsselte MehrfachKanalsignale zur direkten und gleichzeitigen Verwendung in einem herkömmlichen Fernsehempfänger zu erzeugen.

12. Vorrichtung zum Verteilen von Mehrfach-Bildsignalen, von denen jedes durch eine andere Bildquelle an einer System-Endstelle erzeugt wird und Bild- und Synchronisierungskomponenten enthält, an mehrere entfernt von der Endstelle gelegene Teilnehmerstationen, wobei die Vorrichtung umfaßt:
einen gemeinsamen Bild-Bezugstaktgeber (105) zum Erzeugen eines gemeinsamen Synchronisierungssignals und eines dazu synchronen gemeinsamen Zeitbezugssignals (109);
mehrere Bildsynchronisiereinheiten, die das gemeinsame Synchronisierungssignal und die Bildsignale zum Erzeugen mehrerer zeitlich synchronisierter Bildsignale auswerten;
mehrere Zwischenfrequenz-Modulatoreinheiten, die abhängig von den zeitlich synchronisierten Bildsignalen mehrere modulierte Bildsignale erzeugen;
mehrere Verschlüsselungseinheiten, die das Synchronisierungssignal zum Entfernen der Synchronisierungskomponenten aus den modulierten Bildsignalen auswerten, wodurch mehrere verschlüsselte Bildsignale erzeugt werden;
eine an der Endstelle gelegene Einfügungsschaltung (116) zum Verknüpfen des gemeinsamen Zeitbezugssignals (109) mit einem ausgewählten verschlüsselten Bildsignal;
Mittel zum Verteilen der verschlüsselten Bildsignale an mehrere Teilnehmerstationen; und
an der jeweiligen Teilnehmerstation gelegene Mittel zum gleichzeitigen Entschlüsseln aller verschlüsselten Bildsignale durch Einfügen der Synchronisierungskomponenten abhängig von dem ausgewählten Bildsignal.

13. Vorrichtung zum Verteilen von Mehrfach-Bildsignalen, von denen jedes durch eine andere Bildquelle an einer System-Endstelle erzeugt wird und Bild- und Synchronisierungskomponenten enthält, an mehrere entfernt von der Endstelle gelegene Teilnehmerstationen, wobei die Vorrichtung umfaßt:
einen gemeinsamen Bild-Bezugstaktgeber (105) zum Erzeugen eines gemeinsamen Synchroniserungssignals und eines dazu synchronen gemeinsamen Zeitbezugssignals (109);
mehrere Bildsynchronisiereinheiten, die das gemeinsame Synchronisierungssignal und die Bildsignale zum Erzeugen mehrerer zeitlich synchronisierter Bildsignale auswerten;
mehrere Verschlüsselungseinheiten, die das Synchronisierungssignal zum Entfernen der Synchronisierungskomponenten aus den Bildsignalen auswerten, wodurch mehrere verschlüsselte Bildsignale erzeugt werden;
mehrere Zwischenfrequenz-Modulatoreinheiten, die abhängig von den zeitlich synchronisierten Bildsignalen mehrere modulierte verschlüsselte Bildsignale erzeugen;
eine an der Endstelle gelegene Einfügungsschaltung (116) zum Verknüpfen des gemeinsamen Zeitbezugssignals (109) mit einem ausgewählten verschlüsselten Bildsignal;
Mittel zum Verteilen der verschlüsselten Bildsignale an mehrere Teilnehmerstationen; und
an der jeweiligen Teilnehmerstation gelegene Mittel zum gleichzeitigen Entschlüsseln aller verschlüsselten Bildsignale durch Einfügen der Synchronisierungskomponenten abhängig von dem ausgewählten Bildsignal.

14. Teilnehmerstation zum Gebrauch mit einer Vorrichtung nach einem der Ansprüche 11 bis 13 mit:
einer Rückgewinnungsschaltung (127; 402) zum Erzeugen mindestens eines Synchronsignals (130; 418) abhängig von dem gemeinsamen Zeitbezugssignal; und
einem einzelnen Breitbanddecoder (400, 424) zum gleichzeitigen Entschlüsseln aller Kanalsignale gemäß der Umkehrung der Kodiervorschrift abhängig von dem Synchronsignal, um entschlüsselte Mehrfach-Kanalsignale zurückzugewinnen, die sich zur direkten und gleichzeitigen Verwendung in einem herkömmlichen Fernsehempfänger eignen.

15. Teilnehmerstation nach Anspruch 14 in Verbindung mit Anspruch 12 oder 13, wobei dem ausgewählten verschlüsselten und von der Endstelle aus verteilten Bildsignal Berechtigungsdaten hinzugefügt werden und wobei die Teilnehmerstation ferner einen Datendecoder zur Entnahme dieser Berechtigungsdaten aus dem ausgewählten Kanalsignal enthält, um den Breitbanddecoder abhängig von den Berechtigungsdaten zu aktivieren oder zu deaktivieren.

16. Teilnehmerstation nach Anspruch 14, wobei der Breitbanddecoder eine regelbare Verstärkervorrichtung hat, die zur gleichzeitigen und mit dem rückgewonnenen gemeinsamen Zeitbezugssignal (109) synchronen Amplitudenmodulation der Kanalsignale gemäß der Umkehrung der Kodiervorschrift eingesetzt wird.

## Revendications

1. Procédé de distribution de signaux vidéo multiples, chacun étant produit par une source vidéo différente au niveau d'une tête de réseau du système, et chacun étant constitué de composantes d'image et de synchronisation, à une pluralité de postes d'abonnés situés à distance de ladite tête de réseau, ledit procédé comprenant les étapes suivantes :
générer des signaux porteurs multiples au niveau de ladite tête de réseau ;
moduler chacun desdits signaux porteurs au niveau de ladite tête de réseau, avec un signal différent parmi les signaux vidéo pour former des signaux de canal multiples, chacun desdits signaux de canal ayant ses composantes respectives de synchronisation de signal vidéo en concomitance ;
générer un signal de référence de synchronisation commun (109) synchrone avec lesdites composantes de synchronisation concomitantes ;
crypter chacun desdits signaux de canal au niveau de ladite tête de réseau selon une règle de codage prédéterminée commune ;
distribuer lesdits signaux de canal cryptés multiples et ledit signal de référence de synchronisation commun (109) à partir de ladite tête de réseau vers lesdits postes d'abonnés, sous la forme d'un signal HF, commun, lesdits signaux de canal multiples définissant une bande HF, et ledit signal de référence de synchronisation commun (109) étant dans ladite bande ; et
répondre, au niveau de chaque poste d'abonné, audit signal de référence de synchronisation commun (109) pour décrypter simultanément tous les signaux de canal distribués à celui-ci en intervenant sur ledit signal HF commun avec un décodeur unique à large bande (400 ; 424) selon l'inverse de ladite règle de codage, pour récupérer des signaux de canal décryptés multiples en vue d'une application simultanée directe à un récepteur de télévision classique.

2. Procédé selon la revendication 1, dans lequel ladite étape de décryptage comporte l'étape de synchronisation du décryptage desdits signaux de canal avec ledit signal de référence de synchronisation commun (109).

3. Procédé selon la revendication 1, dans lequel ladite étape de cryptage comporte l'étape consistant à moduler simultanément en amplitude lesdits signaux de canal selon ladite règle de codage prédéterminée.

4. Procédé selon la revendication 3, dans lequel ladite étape de décryptage comporte les étapes suivantes :
récupérer ledit signal de référence de synchronisation commun (109) ; et moduler en amplitude simultanément, de manière synchrone avec ledit signal de référence de synchronisation commun (109), lesdits signaux de canal selon l'inverse de ladite règle de codage.

5. Procédé selon la revendication 1, comprenant en outre l'étape consistant à ajouter des données d'autorisation audit signal de référence de synchronisation commun (109), avant de distribuer ledit signal de référence de synchronisation commun (109) auxdits postes d'abonnés.

6. Procédé selon la revendication 5, dans lequel ladite étape de réponse comporte l'extraction desdites données d'autorisation dudit signal de référence de synchronisation commun (109) au niveau de chaque poste d'abonné, et la validation ou l'invalidation de ladite étape de décryptage en réponse auxdites données d'autorisation.

7. Procédé selon la revendication 1, comportant en outre la modulation d'un signal de canal choisi avec ledit signal de référence de synchronisation commun (109), avant la distribution auxdits postes d'abonnés.

8. Procédé selon la revendication 7, dans lequel ladite étape de réponse comporte l'extraction dudit signal de référence de synchronisation commun (109) dudit signal de canal choisi en démodulant ledit signal de canal choisi.

9. Procédé selon la revendication 8, dans lequel ladite étape de modulation comprend une modulation en fréquence.

10. Procédé selon la revendication 9, dans lequel chaque signal de canal est constitué d'une composante audio à une première fréquence porteuse et d'une composante vidéo à une seconde fréquence porteuse différente, et ladite modulation en fréquence ne modifie pas la différence entre lesdites fréquences porteuses.

11. Appareil pour distribuer des signaux vidéo multiples, chacun étant produit par une source vidéo différente au niveau d'une tête de réseau du système, et chacun contenant des composantes d'image et de synchronisation, à une pluralité de postes d'abonnés situés à distance de ladite tête de réseau, l'appareil comprenant :
un moyen au niveau de ladite tête de réseau pour générer des signaux porteurs multiples :
un moyen au niveau de ladite tête de réseau pour moduler chacun desdits signaux porteurs avec un signal vidéo différent parmi les signaux vidéo pour former des signaux de canal multiples, chacun desdits signaux de canal ayant ses composantes respectives de synchronisation de signaux vidéo en concomitance ;
un moyen au niveau de ladite tête de réseau pour générer un signal de référence de synchronisation commun (109) synchrone avec lesdites composantes de synchronisation concomitantes ;
un moyen au niveau de ladite tête de réseau pour provoquer le cryptage desdits signaux de canal selon une règle de codage prédéterminée commune ;
un moyen au niveau de ladite tête de réseau pour distribuer lesdits signaux de canal cryptés multiples et ledit signal de référence de synchronisation commun (109) auxdits postes d'abonnés sous la forme d'un signal HF commun, lesdits signaux de canal multiples définissant une bande HF, et ledit signal de référence de synchronisation commun (109) étant dans ladite bande ; et un moyen, au niveau de chaque poste d'abonné, pour répondre audit signal de référence de synchronisation commun (109) pour le décryptage simultané de tous lesdits signaux de canal distribués à celui-ci en intervenant sur ledit signal HF commun avec un décodeur unique à large bande (400 ; 424) selon l'inverse de ladite règle de codage, pour récupérer des signaux de canal décryptés multiples en vue d'une application simultanée directe à un récepteur de télévision classique.

12. Appareil pour distribuer des signaux vidéo multiples, chacun étant produit par une source vidéo différente au niveau d'une tête de réseau du système, et chacun contenant des composantes d'image et de synchronisation, à une pluralité de postes d'abonnés situés à distance de ladite tête de réseau, l'appareil comprenant :
une horloge commune de référence vidéo (105) pour générer un signal de synchronisation commun et un signal de référence de synchronisation commun (109) synchrone avec lui ;
une pluralité de synchroniseurs de trames sensibles audit signal de synchronisation commun et auxdits signaux vidéo, pour générer une pluralité de signaux vidéo synchronisés ;
une pluralité de modulateurs FI sensibles auxdits signaux vidéo synchronisés, pour générer une pluralité de signaux vidéo modulés ;
une pluralité de codeurs sensibles audit signal de synchronisation pour retirer lesdites composantes de synchronisation desdits signaux vidéo modulés, pour générer une pluralité de signaux vidéo codés ;
un ensemble de circuits d'insertion de données (116) au niveau de ladite tête de réseau, pour combiner ledit signal de référence de synchronisation commun (109) à un signal vidéo codé choisi ;
un moyen pour distribuer lesdits signaux vidéo codés à une pluralité de postes d'abonnés ; et
un moyen, au niveau de chaque poste d'abonné, pour décoder simultanément chacun desdits signaux vidéo codés en réinsérant lesdites composantes de synchronisation en réponse audit signal vidéo choisi.

13. Appareil pour distribuer des signaux vidéo multiples, chacun étant produit par une source vidéo différente au niveau d'une tête de réseau du système, et chacun contenant des composantes d'images et de synchronisation, à une pluralité de postes d'abonnés situés à distance de ladite tête de réseau, l'appareil comprenant :
une horloge commune de référence vidéo (105) pour générer un signal de synchronisation commun et un signal de référence de synchronisation commun (109) synchrone avec lui ;
une pluralité de synchroniseurs de trames sensibles audit signal de synchronisation commun et auxdits signaux vidéo, pour générer une pluralité de signaux vidéo synchronisés ;
une pluralité de codeurs sensibles audit signal de synchronisation pour retirer lesdites composantes de synchronisation desdits signaux vidéo, pour générer une pluralité de signaux vidéo codés ;
une pluralité de modulateurs FI sensibles auxdits signaux synchronisés, pour générer une pluralité de signaux vidéo codés modulés ;
un ensemble de circuits d'insertion de données (116) au niveau de ladite tête de réseau, pour combiner ledit signal de référence de synchronisation commun (109) à un signal vidéo codé choisi ;
un moyen pour distribuer lesdits signaux vidéo codés à une pluralité de postes d'abonnés ; et
un moyen, au niveau de chaque poste d'abonné, pour décoder simultanément chacun desdits signaux vidéo codés en réinsérant lesdites composantes de synchronisation en réponse audit signal vidéo choisi.

14. Appareil de poste d'abonné destiné à être utilisé avec un appareil selon l'une des revendications 11 à 13, ledit appareil de poste d'abonné comprenant :
un circuit de récupération de la synchronisation (127 ; 402) sensible audit signal de référence de synchronisation commun, pour générer au moins un signal de synchronisation (130 ; 418) ; et
un décodeur unique à large bande (400, 424) sensible audit signal de synchronisation, pour décrypter simultanément tous lesdits signaux de canal selon l'inverse de ladite règle de codage, afin de récupérer des signaux de canal décryptés multiples convenant à une application directe simultanée à un récepteur de télévision classique.

15. Appareil selon la revendication 14 combinée aux revendications 12 ou 13, dans lequel ledit signal vidéo codé choisi distribué à partir de ladite tête de réseau est enrichi de données d'autorisation, ledit appareil comprenant en outre un décodeur de données pour extraire lesdites données d'autorisation dudit signal de canal choisi, pour valider ou invalider ledit décodeur à large bande en réponse auxdites données d'autorisation.

16. Appareil selon la revendication 14, dans lequel le décodeur à large bande comporte un appareil à gain variable utilisé pour une modulation en amplitude simultanée, synchrone avec ledit signal de référence de synchronisation commun récupéré (109), et avec lesdits signaux de canal selon l'inverse de ladite règle de codage.
